# EUROPEAN PATENT APPLICATION

(11) **EP 1 624 017 A1**
(43) Date of publication of application: **08.02.2006**
(21) Application number: 04254155.7
(22) Date of filing: 12.07.2004
(51) Int. Cl.: C08L 3/04, C11D 17/04

(54) **Packaged composition for the delivery of said composition into an aqueous medium**

(71) Applicant: THE PROCTER & GAMBLE COMPANY, Cincinnati, Ohio 45202 (US)
(72) Inventor: Boswell, Emily Charlotte, Isleworth, Middlesex TW7 7PP (GB); Connolly, William John, Windlesham, Surrey GU20 6AG (GB); Maggilp, Neil Archibald, Bramley, Surrey GU5 0BX (GB)
(74) Representative: Engisch, Gautier

(57) **Abstract**

The invention is a packaged composition for the delivery of the composition into an aqueous medium. The packaged composition comprises a rigid container made of a biodegradable, starch-based polymer, and an anhydrous composition inside said container. The invention also comprises a process of manufacturing the packaged composition, and a process of delivering the packaged composition to an aqueous medium.

## Description

### Background of the Invention

The present invention relates to a packaged composition for the delivery of a composition into an aqueous medium. A variety of compositions are meant to be delivered to water or an aqueous medium in order to perform a desired function. Such compositions include but are not limited to laundry detergents, toilet-cleaning compositions, dishwashing compositions, fabric softening compositions, bath salt compositions, and food compositions. Such compositions are typically sold to consumers either in bulk packages or as single doses, the latter having an obvious conveniency advantage. However the provision of such single doses for use in an aqueous medium raises a number of technical difficulties, the main one being the provision of a package which is sufficiently water-soluble. If a non-water-soluble pack is used, such as flow-wraps for unit-dose powder "tablets", this pack must be opened & discarded by the consumer, creating waste, and in opening exposes the consumer directly to the concentrated product. Water-soluble packages do exist, which are typically made of polyvinyl alcohol. However, packages made of polyvinyl alcohol are always soft, or flexible, as opposed to rigid. This creates the need to protect the flexible polyvinyl alcohol package, typically by means of "secondary packages" and even often "tertiary packages", such as carton boxes and/or plastic tubs. This, in turn, adds costs, increases logistic complexity for the manufacturer, and added material waste upon use. It is thus an object of the invention to provide a rigid, water-soluble package for providing a composition to an aqueous medium. This package will be sufficiently water soluble that it can be added directly to the aqueous medium without leaving any residue after it will have dissolved, and sufficiently rigid that it can maintain its shape and structure during transport and consumer handling with a minimum of "secondary" and "tertiary" packaging. It has now been found that a suitable material for making water-soluble rigid containers is a biodegradable, starch-based polymer as disclosed hereinafter.

### Summary of the Invention

In a first embodiment, the invention encompasses a packaged composition for the delivery of said composition into an aqueous medium. The packaged composition comprises a substantially rigid container made of a biodegradable polymer comprising a) from 8 to 80% by weight of a starch modified to include anhydroxyalkyl C2-6 group or modified by reaction with an anhydride of a di-carboxylic acid, b) from 0 to 87.9% of starch, c) from 4 to 1 1 % by weight of a water soluble polymer selected from polyvinylacetate, polyvinyl alcohol and copolymers of ethylene and vinyl alcohol which have a melting point compatible with the molten state of the starch components, d) from 0 to 20% by weight of a polyol plasticizer, e) from 0.1 to 1.5 % by weight of a C12-22 fatty acid or salt and from 0 to 12% by weight of added water. The packaged composition further comprises an anhydrous composition inside said container.

In a second embodiment, the invention comprises a process for the manufacture the packaged composition. The process comprises the steps of a) forming a mixture of starch, a modified starch, a water soluble polymer or copolymer containing vinyl alcohol units, up to 20 % of added water and/or a polyol plasticizer, and 0.4 to 1.5 % by weight of a C12-22 fatty acid or salt, and b) forming said rigid container from the mixture obtained in step a), and c) providing said anhydrous composition in said rigid container, and d) closing said container.

In a third embodiment, the invention comprises a method of delivering a composition to an aqueous medium, wherein the packaged composition described herein is contacted with said aqueous medium.

### Detailed Description of the Invention

The invention encompasses a packaged composition. The packaged composition comprises a rigid container, and an anhydrous composition inside said container. By "rigid", it is meant herein that the container will substantially retain its shape when it is neither filled, sealed nor supported in any manner, and that it will not substantially distort once it comprises the product it is meant to comprise. The rigid container is made of a starch based biodegradable polymer. By "made of", it is meant herein that the starch based biodegradable polymer is the principal constituent of the container. The starch based biodegradable polymer of interest herein has been disclosed in WO 00/36006, and comprises a) from 8 to 80% by weight of a starch modified to include anhydroxyalkyl C2-6 group or modified by reaction with an anhydride of a di-carboxylic acid, b) from 0 to 87.9% of starch, c) from 4 to 11 % by weight of a water soluble polymer selected from polyvinylacetate, polyvinyl alcohol and copolymers of ethylene and vinyl alcohol which have a melting point compatible with the molten state of the starch components, d) from 0 to 20% by weight of a polyol plasticizer, and e) from 0.1 to 1.5 % by weight of a C 12-22 fatty acid or salt.

Component a) is a modified starch. This component contributes structural benefits to the resulting material. A preferred component is hydroxypropylated amylase, but other suitable substituents include hydroxyethylor hydroxybutyl to form hydroxyether substitutions, or anhydrides such as maleic, phthalic or octenyl succinic anhydride can be used to produce ester derivatives. The degree of substitution (i.e. the average number of hydroxyl groups in a unit that are substituted) is preferably 0.05 to 2. The preferred starch material is a high amylosemaize starch. A preferred component is a hydroxypropylated high amylose starch A939 marketed by Goodman Fielder.

Component b) is a non-modifide starch, and any commercially available starch is suitable for use herein. Suitable starches can be derived from wheat, maize, potato, rice, oat, arrowroot, and pea sources. Generally the water content in the starch us from about 10 to 15 %. A preferred concentration range for suitable starches for use herein is from 50% to 70.6%.

Component c) is a water-soluble polymer which must be compatible with starch in that it should have a low melting point, compatible with the processing temperatures for starch. Polyvinyl alcohol is a preferred polymer, but polymers of ethylene-vinyl alcohol, ethylene vinyl acetate or blends with polyvinylalcohol may also be used herein.

Component d) is a polyol plasticizer. The amount of plasticizer largely influences the rigidity of the starch-based biodegradable polymer, and hence the rigidity of the container. Thus higher amounts of plasticizer are best avoided. Low amounts of plasticizer, however, may improve the mechanical resistance of the biodegradable starch based polymer. Preferred for use herein is glycerol although ethylene glycol and diethylene glycollo are also suitable, as is sorbitol. When low amounts of plasticizer are used, it may be necessary to add low amounts of water to improve processing.

Component e) is a fatty acid or fatty acid salt, which is preferably present in concentrations of from 0.6% to 1 %. Stearic acid is the preferred component. Sodium and potassium saltsof stearic acid can also be used. Lauric, myristic, palmitic, linoleic and behenic acids are all suitable.

In another embodiment of the invention, there is provided a process for the manufacture of a packaged composition according to any of the preceding claims which comprises the steps of a) forming a mixture of starch, a modified starch, a water soluble polymer or copolymer containing vinyl alcohol units, up to 20 % of added water and/or a polyol plasticizer, and 0.4 to 1.5 % by weight of a C12-22 fatty acid or salt, and b) forming said rigid container from the mixture obtained in step a), c) providing said anhydrous composition in said rigid container, and d) closing said container.

The exact processing conditions depend on the formulations and the desired properties of the product to be produced. A preferred method of carrying out this invention involves mixing the starch,modified starch, vinylalcohol polymer lubricant and fatty acid components into a free flowing powder and this can be done in any conventional mixer. The powder obtained is then introduced into a screw extruder and subjected to an elevated temperature by the shearing action of the screw and the application of external heat to the barrel. The temperature is raised to a maximum in the range of 130c to 160c. Any liquid components including additional water are introduced during this step. The melt that is formed is propelled toward the die and in moving forward the temperature is reduced to a value in the range of 85c to 105c. After extrusion through a die, material can be pelletised for forming in a secondary process such as sheet extrusion, injection moulding or blow moulding. Alternatively, the melt can be moulded directly via extruding from a sheet forming die, into a parison or into an injection mould.. The melt is preferably injection molded at a temperature between 120c and 170c.

The composition which is packaged inside the rigid container is an anhydrous composition. By anhydrous, it is meant that the composition should contain sufficiently little water to avoid dissolving the rigid container. The composition can be solid or liquid, so long as it is anhydrous. The anhydrous compositions which can be used in the invention include, but are not limited to, laundry detergents, toilet-cleaning compositions, dishwashing compositions, fabric softening compositions, bath salt compositions, food compositions, all of which have extensively been disclosed in the art.

The container is closed by any means which are known to the man skilled in the art, such as a cap or cover which can be separately molded then fitted, or a sheet which is secured to cover the opening of the container. As an alternative, two edges or regions of the container can be brought together and sealed. If a separate part is used as a closure, as is the case with a cap or cover or sheet, then the closure should also be made of a water-soluble material, preferably a biodegradable polymer as disclosed herein. If adhesives are used, they should also be water-soluble. It is also possible to "weld" together the container and its closure (or two edges or regions of the container) by providing a small amount of water to partly dissolve the regions of the container and the closure which are then held together while the water evaporates, thus providing the weld.

The present invention further encompasses a process of using the packaged compositions of the invention. In its broadest definition, the process is a method of delivering a composition to water, wherein a packaged composition as described herein is contacted with water, preferably immersed in water. Upon contact with the aqueous medium, the rigid container is dissolved, and the composition is released in the aqueous medium.

The invention is illustrated by the following examples.

### Example

A number of suitable material composition examples were proposed in WO00/36006

| **Material** | **1** | **2** | **3** | **4** |
|---|---|---|---|---|
| **Hydroxypropylated starch*** | 39.5 | 39.5 | 79 | 79 |
| **Wheat starch** | 39.5 | 39.5 | 0 | 0 |
| **PVOH** | 8 | 8 | 8 | 8 |
| **Stearic acid** | 1 | 1 | 1 | 1 |
| **Glycerol** | 6 | 3 | 6 | 3 |
| **Water** | 8 | 10 | 8 | 10 |

| | | | | |
|---|---|---|---|---|
| * A939 marketed by Goodman Fielder | | | | |

These formulations are suitable for extruding and blowing to produce film or sheets.

These materials are extruded from a sheet forming die using a temperature profile range from 60deg C to 140degC and die pressure of 1400psi. Using a suitable speed of take-off roller and film cooling / drying sequence a consistent sheet can be produced of thicknesses between 100 and 750 micron.

### Example 1: Thermoformed shell.

A composition as listed above is extruded to form sheets of 100-750 microns in thickness. These sheets are compression or vacuum thermoformed into a 'clam shell' design at temperatures of 110-150c. This design consists of a substantially hemispherical section of sufficient volume to contain the dose of product required, surrounded by an equatorial annular ring. The ring is hinged to a lid made of the same material.

Product is filled into the hemispherical section, the lid folded over and sealed to the annular ring by heat, adhesive, or solvents to create a sealed, hemispherical container.

The size of the annular ring is kept to a minimum to reduce the 'sharp' edge, although has to be of sufficient size to create a robust seal. Methods of achieving this include sealing via a 'hot knife' device, cutting very close to the hemispherical section, or by a secondary process of cutting down the excess ring material after a seal has been formed.

### Example 2: Thermoformed shell with separate lid.

Material compositions are processed as in the previous example to create the hemispherical section, and a separate lid section is also produced. The base section is filled with product, and the lid attached to the base section via a 'snap-fit' or undercut design to form an effective seal to prevent the product from escaping. This lid can also be sealed via heat, solvent or adhesive as in the previous example.

In both cases, it is desirable for the volume of the container to be slightly larger than that of the product, such that on initial dissolution / puncture of the structure, water is able to enter the device and move freely within, maximising the speed of dissolution of product.

### Example 3: Injection moulded base and lid.

Material compositions are extruded as above and injection moulded using nozzle temperatures between 120c and 170c under pressures between 400 bar and 1500 bar into a mould at room temperature to form the container. Moulds are constructed to produce parts with either an attached, hinged lid, or a separate part as in examples 1 & 2.

The use of thin-walled injection moulding to produce these devices allows greater accuracy for sealing systems. Screw-fit or slot-in lid sections can be manufactured, reducing any issues with sharp areas on the sealing section of the annular ring. In addition, injection moulding gives greater freedom for designs of the base and lid sections. Variations in wall thickness to provide strengthening ribs such to minimise overall wall thickness and material usage whilst retaining an overall rigid structure are possible, as are shape variations to improve aspects such as packing efficiency or aesthetic appeal.

## Claims

1. A packaged composition for the delivery of said composition into an aqueous medium, comprising:
- a substantially rigid container, and
- an anhydrous composition inside said container,
**characterised in that** said container is made of of a biodegradable polymer comprising a) from 8 to 80% by weight of a starch modified to include anhydroxyalkyl C2-6 group or modified by reaction with an anhydride of a di-carboxylic acid, b) from 0 to 87.9% of starch, c) from 4 to 1 1 % by weight of a water soluble polymer selected from polyvinylacetate, polyvinyl alcohol and copolymers of ethylene and vinyl alcohol which have a melting point compatible with the molten state of the starch components, d) from 0 to 20% by weight of a polyol plasticizer, and e) from 0.1 to 1.5 % by weight of a C12-22 fatty acid or salt.

2. A packaged composition according to claim 1 wherein said composition is a laundry detergent, a toilet-cleaning composition, a dishwashing composition, a fabric softening composition, a bath salt composition, or a food composition.

3. A packaged composition according to claims 1 or 2 wherein said composition is in granular form.

4. A packaged composition according to claims 1 or 2 wherein said detergent composition is in liquid form.

5. A packaged composition according to the preceding claims wherein component e) is stearic acid.

6. A packaged composition according to the preceding claims wherein component c) is a polyvinyl alcohol component.

7. A packaged composition according to the preceding claims wherein the polyol plasticiser is glycerol.

8. A packaged composition according to the preceding claims wherein the polymer is thermoformable into said rigid container and the polyol plasticiser content is less than 11%.

9. A packaged composition according to the preceding claims wherein the polyol plasticiser content is zero, and added water is from 10 to 12 %.

10. A process for the manufacture of a packaged composition according to any of the preceding claims which comprises the steps of a) forming a mixture of starch, a modified starch, a water soluble polymer or copolymer containing vinyl alcohol units, up to 20 % of added water and/or a polyol plasticizer, and 0.4 to 1.5 % by weight of a C12-22 fatty acid or salt, and b) forming said rigid container from the mixture obtained in step a), c) providing said anhydrous composition in said rigid container, and d) closing said container.

11. A process according to claim 10, wherein the mixture formed in step a), either directly after mixing or after extrusion and pelletising, is used to form a melt within the temperature range of 120c to 170c, and said mixture is then injected under pressure into a mould for said container.

12. A process according to claim 10, wherein the mixture formed in step a) is used to form a melt within the temperature range of 130c to 160c, the temperature is then reduced and the mixture is further worked, and the mixture is extruded into a sheet and subsequently thermoformed into said rigid container.

13. A process according to claim 10, wherein the mixture formed in step a), either directly after mixing or after extrusion and pelletising, is used to form a melt within the temperature range of 130c to 180c and said mixture is then extruded as a parison, and said parison is clamped into a blow-mould for said container and inflated under pressure to form the container.

14. A method of delivering a composition to an aqueous medium, wherein a packaged composition according to claims 1-9, is contacted with said aqueous medium.

15. A method according to claim 13 wherein said packaged composition is immersed in said aqueous medium.
